# EUROPÄISCHE PATENTSCHRIFT

(11) **EP 3 107 177 B1**
(45) Veröffentlichungstag und Bekanntmachung des Hinweises auf die Patenterteilung: **22.08.2018**
(21) Anmeldenummer: 16161692.5
(22) Anmeldetag: 22.03.2016
(51) Int. Cl.: H02J 3/38, H02J 3/14, H02J 13/00, H02J 3/00

(54) **NETZREGELUNG BEI GRENZWERTÜBERSCHREITUNGEN IN EINEM NIEDER- ODER MITTELSPANNUNGSNETZ**
NETWORK CONTROL FOR LIMIT EXCEEDENCES IN A LOW OR MEDIUM VOLTAGE NETWORK
REGULATION DE RESEAU POUR DES DEPASSEMENTS DE VALEURS LIMITES DANS UN RESEAU DE TENSION MOYENNE OU FAIBLE

(30) Priorität: 15.06.2015 DE 102015210882
(43) Veröffentlichungstag der Anmeldung: 21.12.2016
(73) Patentinhaber: Siemens Aktiengesellschaft, 80333 München (DE)
(72) Erfinder: Einfalt, Alfred, 1210 Wien (AT); Gawron-Deutsch, Tobias, 1040 Wien (AT)
(74) Vertreter: Maier, Daniel Oliver

(56) Entgegenhaltungen:
- EP-A2- 2 020 506
- WO-A1-2014/090285
- DE-A1-102005 056 084
- TOBIAS GAWRON-DEUTSCH ET AL: "Integration of energy market and distribution grid operation by means of a flexibility operator", ELEKTROTECHNIK UND INFORMATIONSTECHNIK., Bd. 131, Nr. 3, 1. Mai 2014 (2014-05-01), Seiten 91-98, XP055292393, AT ISSN: 0932-383X, DOI: 10.1007/s00502-014-0200-6

## Beschreibung

### Technisches Gebiet

Die Erfindung betrifft ein Verfahren zur Netzregelung bei Grenzwertüberschreitungen in einem Nieder- oder Mittelspannungsnetz, wobei Stellbefehle von einer zentralen Regeleinheit des Nieder- oder Mittelspannungsnetzes an steuerbare Komponenten des Nieder- oder Mittelspannungsnetzes gesendet werden. Die Erfindung kann jeweils nur auf ein Niederspannungsnetz oder nur auf ein Mittelspannungsnetz angewendet werden.
Niederspannungsnetze sind ein Teil des Stromnetzes zur Verteilung der elektrischen Energie an den größten Teil der elektrischen Endverbraucher, der aus Niederspannungsgeräten besteht. Um Spannungsverluste zu vermeiden, sind Niederspannungsnetze in der räumlichen Ausdehnung auf einen Bereich von einigen 100 m bis zu einigen wenigen Kilometern beschränkt. Sie werden daher regional über Transformatorenstationen aus einem übergeordneten Mittelspannungsnetz gespeist. Sie werden in Europa üblicher Weise mit einer Netzspannung von 230 V (zwischen jedem Außenleiter und dem Neutralleiter) bzw. 400 V (zwischen den drei Außenleitern), jedenfalls aber nur bis zu 1000 V betrieben. Bemessungsleistungen einzelner Ortsnetztransformatoren können je nach Zielnetzplanung des jeweiligen Verteilnetzbetreibers variieren, liegen aber typischer Weise bei 250 oder 400kVA für ländliche Gebiete und 630 oder 800kVA für innerstädtische Gebiete.
Der Begriff Niederspannungsnetz im Sinne dieser Erfindung bezeichnet einen Teil des Verteilernetzes, also einen Abschnitt, der von einem bestimmten Ortsnetztransformator mit elektrischer Energie versorgt wird.

Komponenten des Niederspannungsnetzes können sein: Stromerzeuger (z.B. Photovoltaikanlagen,
Kleinwindkraftanlagen), Speicher (z.B. Batterien, Wärmepumpen, Ladestationen für Elektrofahrzeuge), flexible Verbraucher (z.B. elektrische Speicherheizungen, Gebäude mit und ohne Gebäudeautomationssystem) und Netzbetriebsmittel (Transformatoren, Leitungen, Sicherungen, Messgeräte wie Smart Meter,...).

Dabei können insbesondere Stromerzeuger, Speicher und flexible Verbraucher als steuerbare Komponenten ausgeführt sein.

Mittelspannungsnetze sind ein Teil des Stromnetzes zur Verteilung der elektrischen Energie auf Strecken im Bereich einiger Kilometer bis zu 100 km in ländlichen Bereichen. Sie werden üblicherweise mit Hochspannung zwischen 1 kV und 52kV, insbesondere mit 10 kV, 20 kV oder 30 kV betrieben. Ein Mittelspannungsnetz dient typischerweise der elektrischen Energieversorgung einer Region, die mehrere Ortschaften, oder in Städten einen Stadtteil, umfasst. Mittelspannungsnetze der regionalen Verteilnetzbetreiber werden im Regelfall in Umspannwerken aus dem übergeordneten Hochspannungsnetz, wie der 110-kV-Ebene (Verteilnetzebene), gespeist und dienen der Anspeisung der regional verteilten Transformatorenstationen, welche die einzelnen Niederspannungsnetze zu den Endkunden versorgen. Größere Stromkunden, wie beispielsweise Industriebetriebe und Krankenhäuser aber auch größere Schwimmbäder und größere Rundfunktürme, haben meist eigene Mittelspannungsanschlüsse mit betriebseigener Umspannanlage.

Die für die Versorgung nötigen Leistungstransformatoren zur Anspeisung bewegen sich im Bereich von 20 MVA bis 60 MVA. In der Regel sind diese Leistungstransformatoren auch die letzte Ebene, auf der mittels Stufenschalter lastabhängige Spannungsschwankungen ausgeglichen werden können. Bei Bedarf können bei großer Einspeiseleistung von dezentral gewonnen regenerativen Energieträgern elektronische Mittelspannungsregler eingesetzt werden.

Mittelspannungsnetze sind in der Topologie als Strahlennetz oder als Ringnetz ausgeführt, insbesondere in städtischen Bereichen sind Ringleitungen üblich. Mittelspannungsnetze können von mehreren Punkten gespeist werden, auch kleinere Kraftwerke wie Windkraftanlagen, Biogasanlagen und große Photovoltaikanlagen speisen in regionale Mittelspannungsnetze ein.

Im Mittelspannungsnetz können insbesondere Leistungstransformatoren, Mittelspannungsregler, Stromerzeuger, Speicher und flexible Verbraucher als steuerbare Komponenten ausgeführt sein.

### Stand der Technik

Der klassische Netzbetrieb bei der Elektrizitätsversorgung ist durch die zunehmende Durchdringung mit dezentralen, meist erneuerbaren, Energieerzeugungsanlagen (DEA, üblicher Weise im Leistungsbereich von 3 bis 100 kW) vor große Herausforderungen gestellt. Hinzu kommen die Entwicklung der Elektromobilität und damit eine Verstärkung der Substitution von anderen Energieübertragungsformen durch Elektrizität. Durch den Wandel des Energiesystems von einem auf konventionelle Energieträger gestütztes auf ein auf erneuerbare Energieträger gestütztes steigt der Bedarf an Flexibilitäten. Dies resultiert aus der Tatsache, dass viele erneuerbare Energiequellen (Wind, Sonne, Wasser) nur situationsabhängig und nicht nach vorgegebenen Fahrplänen zur Verfügung stehen. Dadurch muss sich die frühere Prämisse "Erzeugung folgt dem Verbrauch" grundlegend hin zu "Verbrauch folgt Erzeugung" ändern.

Die EP 2 020 506 A2 offenbart ein Verfahren zur Ermittlung einer Regelungsreserve von einer oder mehreren Windenergieanlagen, denen zum Betrieb ein Sollwert für mindestens eine elektrische Größe vorgegeben und für die eine Steuereinheit vorgesehen ist, die eine Leistungskurve aufweist, welche abhängig von Werten des Windes einen Maximalwert der elektrischen Größe enthält. Die Steuereinheit ermittelt über die Leistungskurve aus dem Istwert des Windes einen Maximalwert der elektrischen Größe und subtrahiert hiervon einen aktuellen Wert der elektrischen Größe, anschließend übermittelt die Steuereinheit den ermittelten Maximalwert und/oder die Differenz als Regelungsreserve an eine übergeordnete Steuereinheit und/oder an ein externes Energieversorgungsunternehmen.

Sogenannte Flexibilitätsanbieter stellen solche Werkzeuge zur Anpassung des Verbrauchs an die Erzeugung dar. Ein Flexibilitätsanbieter ist als eine große Gruppe unterschiedlicher Anwendungen zu sehen. Das können im einfachsten Fall flexible Lasten sein, z.B. Wärmepumpen, Ladestellen für Elektromobilität, Umwälzpumpen, Elektroheizungen, Elektroboiler, die reduziert oder abgeschaltet werden. Auf der Erzeugungsseite könnte die Einspeisung erneuerbarer oder auch konventioneller Erzeugungsanlagen (Windkraftanlagen, Photovoltaikanlagen, Kraft-Wärme-Kopplungen) reduziert werden. Ist auch ein elektrischer Speicher verfügbar, eventuell sogar in Kombination mit flexiblen Lasten oder auch Erzeugungsanlagen, sind Flexibilitäten in alle Leistungsrichtungen möglich.

Die Kernfrage der Energiewende aus großtechnischer Sicht ist nun, wie die einzelnen (nur oder auch) Energie verbrauchenden Netzteilnehmer, wie etwa Gebäude oder Gebäudegruppen, möglichst unbeeinflusst an unterschiedlichen Energiemärkten teilnehmen können, um z.B. die Stadt als Flexibilitätsquelle zur Unterstützung der Integration von erneuerbaren Energiequellen zu erschließen. Dabei muss aber sichergestellt werden, dass es zu keiner Verletzung der zulässigen Grenzwerte (Spannung, maximale Leistung, Frequenz) im Energieversorgungsnetz, etwa im Niederspannungsnetz, kommt.

Es kann zu Netzengpässen kommen, weil sich durch die Teilnahme an Energiemärkten und die Nutzung von internen Speichern (die aus Netzsicht nicht erkennbar sind, weil sie sich z.B. innerhalb von Gebäuden oder Gewerbeanlagen befinden) die bisherige zeitliche Verteilung der Last (z.B. entsprechend einem Standardlastprofil H0) ändern kann. Viele Prosumer (Kunden, die Energie produzieren und konsumieren) bekommen die gleichen Informationen über billige Energie und ändern demnach ihr Verbrauchsverhalten. Die bisherigen Annahmen zur Gleichzeitigkeit sind nicht mehr gültig und es kann zu starken Belastungsspitzen kommen. Wenn diese Belastungsspitzen die Grenzwerte des Energieversorgungsnetzes verletzen, muss eingegriffen werden.

Das sogenannte "Smart Grid" wird als Lösung für diese Problemstellungen gesehen. Das Smart Grid oder intelligente Stromnetz umfasst die kommunikative Vernetzung und Steuerung von Stromerzeugern, Speichern, elektrischen Verbrauchern und Netzbetriebsmitteln in Energieübertragungs- und Energieverteilungsnetzen der Elektrizitätsversorgung.

In Zukunft werden sogenannte "Smart Buildings", auch als intelligente Häuser oder intelligente Gebäude bezeichnet, ebenfalls Komponenten wie fluktuierende Erzeuger (z.B. Photovoltaikanlagen, Kleinwindkraftanlagen), flexible Verbraucher und Speicher für elektrische Energie enthalten, oder etwa die Ladeinfrastruktur für Elektrofahrzeuge. Das Gebäude wird "smart" bzw. intelligent durch den Einsatz eines modernen Gebäudeautomationssystems (CEMS - Customer Energy Management System). Gebäudeautomation umfasst die Gesamtheit von Überwachungs-, Steuer-, Regel- und Optimierungseinrichtungen in Gebäuden. Ziel ist es, Funktionsabläufe komponentenübergreifend selbstständig (automatisch) und nach vorgegebenen Einstellwerten (Parametern) durchzuführen. Alle Sensoren, Aktoren, Bedienelemente, Verbraucher und andere technische Einheiten im Gebäude werden miteinander vernetzt. Abläufe können in Szenarien zusammengefasst werden. Kennzeichnendes Merkmal ist die durchgängige Vernetzung mittels eines Bussystems.

Die Gebäudeautomationssysteme der Smart Buildings, bzw. die Energiemanagementsysteme als Teil der Gebäudeautomationssysteme, müssen daher für die einzelnen Komponenten des Gebäudes den Eigenbedarf elektrischer und thermischer Energie optimieren, lokale (auf das Gebäude bezogene) Prognosen erstellen und flexible Tarifvorgaben, die markt- bzw. auch netzspezifische Anteile aufweisen, berücksichtigen.

Ein Niederspannungsnetz weist verschiedene aktive Komponenten auf, die im Niederspannungsnetz zusammenarbeiten. Es gibt mehrere Arten von Verbrauchern, Erzeugern und Mischformen. Die angeschlossenen Gebäude können keine fernauslesbaren Zähler aufweisen, mit einem sogenannten "Smart Meter" ausgestattet oder auch mit einem Gebäudemanagementsystem ausgestattet sein. Weiters gibt es den Verteilnetzbetreiber, der einen, womöglich regelbaren, Ortsnetztransformator (RONT) und damit das gegenständliche Niederspannungsnetz betreibt. Alle diese Komponenten bilden zusammen den lokalen Abzweig, in dem die Netzrandbedingungen eingehalten werden müssen.

Keine der oben genannten Komponenten kann etwaige Netzprobleme ohne Drosselung beheben. Bisher wurden z.B. Wechselrichter mit einer P/Q-Einspeisebegrenzung (z.B. spannungsabhängige Wirk- und Blindleistungskennlinien) ausgestattet, die verhindert, dass bei einer lokalen Grenzwertüberschreitung zu viel Leistung in das Niederspannungsnetz eingespeist wird. Damit ist dann zwar lokal die Einhaltung der Netzrandbedingungen sichergestellt, aber es ist weder sicher, dass die Drosselung dieser Komponente ausreichend ist, noch, dass nicht zu stark gedrosselt wird und dadurch weniger Energie als möglich gewonnen wird.

Einen Versuch, die Marktaufsicht und die Netzaufsicht zu entflechten, stellt die sogenannte "Netzampel" dar. Die Zustände rot, gelb und grün spiegeln den jeweiligen Netzzustand wider. Die einzelnen Komponenten, insbesondere die Erzeuger, können nur im Zustand grün, wo aus lokaler Netzsicht keine Beschränkungen vorliegen und alle Marktmechanismen (z.B. Systemdienstleistungen für Übertragungsnetze zur Verfügung stellen) ohne Einschränkung eingesetzt werden können, oder im Zustand rot, wo die Netzrandbedingungen harte Vorgaben für die Einspeisung verlangen und dadurch Marktmechanismen für beschränkte Zeit lokal eingeschränkt sind, arbeiten. Im gelben Zustand sind Überlastungen zu erwarten und es kann innerhalb der Netzrandbedingungen eine marktbasierende Optimierung der Auslastung des Niederspannungsnetzes vorgenommen werden, also eine Optimierung der von den einzelnen Komponenten (z.B. der Erzeuger im Niederspannungsnetz) oder den einzelnen Marktteilnehmern gelieferten Energie im Hinblick auf den gerade geltenden Energiepreis. Hier werden mehr oder weniger komplizierte Mechanismen diskutiert, die darauf abzielen möglichst viele Marktanforderungen ohne starke Einschränkung zu ermöglichen.

Im roten Bereich wird es dem Verteilnetzbetreiber (kurz Netzbetreiber) ermöglicht, sein Verteilnetz zu schützen. Hier laufen zum einen klassische Netzregelungen, z.B. die Ansteuerung von regelbaren Netztransformatoren. Kann der Netzbetreiber sein Netz nicht ohne Mithilfe von steuerbaren Komponenten des Niederspannungsnetzes, z.B. Smart Buildings, schützen, muss es ein sogenanntes Prioritätssignal geben, das zwingend ist und auf das augenblicklich reagiert wird.

Eine Möglichkeit zur Umsetzung des Prioritätssignals ist die bekannte Tonrundsteueranlage, kurz TRA. Hiermit werden derzeit Lasten wie z.B. Speicherheizungen von einer Zentrale aus gesteuert. Hier bestehen aber auch technische Probleme, weshalb die TRA von Netzbetreibern zunehmend durch andere Einrichtungen abgelöst wird. Eine Nachfolge stellen zum Teil Smart Meter dar, die entweder selbst oder über ein zusätzliches Gateway einzelne Komponenten abschalten können. Es ist also technisch bereits möglich, einen unidirektionalen EIN/AUS Befehl abzusenden. Erhalten mehrere Komponenten gleichzeitig einen solchen Befehl, kann es durch das gleichzeitige Schalten der kollektiven Lasten zu Problemen kommen, die durch eine Gruppierung von Lasten (z.B. je Umspannwerk) und ein zeitlich versetztes Aussenden der Abschaltbefehle gemildert werden kann, was zentral von der Leitstelle aus erfolgt.

Allerdings sind diese Methoden des unidirektionalen Aussendens von Stellbefehlen für die Anwendung als Prioritätssignal für den gezielten Schutz ausgewählter Niederspannungsnetze zu global und zu grob.

Darstellung der Erfindung Ein Ziel der vorliegenden Erfindung ist es daher, für ein Verfahren zur Netzregelung bei Grenzwertüberschreitungen in einem Nieder- oder Mittelspannungsnetz, wobei Stellbefehle von einer zentralen Regeleinheit des Nieder- oder Mittelspannungsnetzes an steuerbare Komponenten des Nieder- oder Mittelspannungsnetzes gesendet werden, ein Prioritätssignal zu generieren, das auf das jeweilige Nieder- oder Mittelspannungsnetz besser abgestimmt ist.

Diese Aufgabe wird durch ein Verfahren und ein System nach den unabhängigen Ansprüchen gelöst. Weitere Ausgestaltungen werden durch die abhängigen Ansprüche offenbart. Es werden beispielsweise von mehreren steuerbaren Komponenten jeweils laufend Informationen über die eigenen Notreserven zur Reduzierung von Grenzwertüberschreitungen an die zentrale Regeleinheit gesendet werden,
- dass die zentrale Regeleinheit bei einer Grenzwertüberschreitung die notwendige Korrektur berechnet und eine entsprechende Handlungsanweisung zur Reduzierung von Grenzwertüberschreitungen an zumindest eine steuerbare Komponente sendet, die Informationen über Notreserven sendet,
- dass mit jeder Handlungsanweisung ein Wahrscheinlichkeitsfaktor mitgesendet wird, der inkrementell erhöht wird, wenn bei unzureichender Reaktion der steuerbaren Komponenten die Grenzwertüberschreitung nicht verhindert wird und somit erneut eine Handlungsanweisung gesendet werden muss, und
- dass die zentrale Regeleinheit den Netzbetreiber informiert, falls die Notreserven der steuerbaren Komponenten nicht ausreichen, um die Grenzwertüberschreitung zu verhindern.

Das laufende Übermitteln der Informationen über die Notreserven kann aktiv durch die steuerbaren Komponenten erfolgen oder passiv nach Anfrage durch die zentrale Regeleinheit. Nach Vorliegen der Information wird bei einer Grenzwertüberschreitung berechnet, welche Korrektur durch die steuerbaren Komponenten vorgenommen werden könnte. Es wird dann als Prioritätssignal eine Handlungsanweisung erstellt, z.B. die Wirkleistung um einen bestimmten Wert zu reduzieren oder zu erhöhen, sowie ein Wahrscheinlichkeitsfaktor im Bereich zwischen 0 und 1. Wird die Handlungsanweisung nicht oder noch nicht ausreichend befolgt, wird dieser Wahrscheinlichkeitsfaktor um einen bestimmten Wert erhöht, und die Handlungsanweisung mit diesem neuen Wahrscheinlichkeitsfaktor erneut an die teilnehmenden steuerbaren Komponenten gesendet. Dieser Vorgang wird so lange wiederholt, bis die Grenzwertüberschreitung behoben ist.

Ergibt die Berechnung der zentralen Regeleinheit, dass die gemeldeten Notreserven nicht ausreichen, um die Grenzwertüberschreitung ausreichend zu reduzieren, wird dies gleich an den Netzbetreiber gemeldet, damit dieser entsprechende Maßnahmen setzen kann.

Grundsätzlich sind zwei verschiedene Verfahrensvarianten denkbar. Die erste besteht darin, dass die gleiche Handlungsanweisung mit dem gleichen Wahrscheinlichkeitsfaktor an mehrere, insbesondere alle, steuerbaren Komponenten gesendet wird, die Informationen über Notreserven senden. Dies hat den Nachteil, das die Anstrengungen zur Behebung der Grenzwertverletzung nicht gerecht auf die steuerbaren Komponenten verteilt wird.

Hier kann die zweite Ausführungsvariante Abhilfe bieten, indem unter Berücksichtigung der jeweiligen Notreserve der einzelnen steuerbaren Komponenten für unterschiedliche steuerbare Komponenten unterschiedliche Handlungsanweisungen, aber mit demselben Wahrscheinlichkeitsfaktor, gesendet werden. Also jenen Komponenten, die größere Notfallreserven haben, könnte ein größerer Beitrag zur Netzstabilisierung abverlangt werden (z.B. mehr kW an Leistungserhöhung oder - reduktion) als Komponenten mit geringeren Notfallreserven.

Dieser Ansatz kann noch weiter verbessert werden, indem die Auswahl der steuerbaren Komponenten, die einen Beitrag aus ihren Notreserven zu leisten haben, aufgrund von Topologieinformation über das Nieder- oder Mittelspannungsnetz erfolgt. Damit kann sichergestellt werden, dass nur jene Komponenten angesprochen werden, die aufgrund ihrer Position im Nieder- oder Mittelspannungsnetz tatsächlich zu einer Lösung der Grenzwertüberschreitung beitragen können.

Eine Möglichkeit zur Berücksichtigung der Topologieinformation besteht darin, dass die Information über die Notreserve jeder steuerbaren Komponente in Zusammenhang mit deren Lage im Nieder- oder Mittelspannungsnetz abgespeichert wird.

Damit bei einer Auswahl von bestimmten steuerbaren Komponenten für einen Beitrag zur Reduzierung der Grenzwertüberschreitung nicht eine einzelne Komponente über Gebühr belastet wird, kann vorgesehen sein, dass immer eine Mindestanzahl von steuerbaren Komponenten ausgewählt wird.

Eine - zur Auswahl von einer Mindestanzahl alternative - oder für beide Ausführungsvarianten weitere Ausführungsform der Erfindung sieht vor, dass jede steuerbare Komponente nach dem Zufallsprinzip für sich einen Auswahlfaktor festlegt, der zum Wahrscheinlichkeitsfaktor addiert wird und bei jeder weiteren Grenzwertüberschreitung im Nieder- oder Mittelspannungsnetz neu festgelegt wird. Der Auswahlfaktor liegt so wie der Wahrscheinlichkeitsfaktor zwischen 0 und 1. Damit ergibt sich für alle von einer bestimmten Handlungsanweisung betroffenen steuerbaren Komponenten ein unterschiedlicher resultierender Wahrscheinlichkeitsfaktor, wobei die Verpflichtung zum Handeln für die einzelne Komponente mit Erreichen des Werts 1 zwingend wird. Der Auswahlfaktor bleibt für die bestehende Grenzwertüberschreitung gleich, auch wenn die Handlungsanweisung mehrmals mit steigendem Wahrscheinlichkeitsfaktor gesendet werden muss. Erst bei der nächsten Grenzwertüberschreitung ergibt sich für die betreffende Komponente aufgrund des Zufallsprinzips in der Regel ein anderer Auswahlfaktor und damit ein anderer resultierender Wahrscheinlichkeitsfaktor als bei anderen Komponenten. Auf diese Weise kann sichergestellt werden, dass nicht immer die gleichen Komponenten zur Behebung von Grenzwertüberschreitungen herangezogen werden.

Die Informationen der einzelnen steuerbaren Komponenten über die Notreserve werden in der Regel zumindest einen der folgenden Werte enthalten:
- die maximal mögliche Reduzierung der Wirkleistung
- die maximal mögliche Erhöhung der Wirkleistung
- die maximal mögliche induktive Blindleistung
- die maximal mögliche kapazitive Blindleistung. Das System zur Durchführung des Verfahrens, umfasst beispielsweise eine zentrale Regeleinheit und mehrere steuerbare Komponenten eines Nieder- oder Mittelspannungsnetzes, die über ein Kommunikationsnetz miteinander verbunden sind, wobei
- mehrere steuerbare Komponenten über eine Sendeeinrichtung verfügen, um über das Kommunikationsnetz jeweils laufend Informationen über die eigenen Notreserven zur Reduzierung von Grenzwertüberschreitungen an die zentrale Regeleinheit zu senden,
- die zentrale Regeleinheit ausgebildet ist, um bei einer Grenzwertüberschreitung die notwendige Korrektur zu berechnen und eine entsprechende Handlungsanweisung zur Reduzierung von Grenzwertüberschreitungen an zumindest eine steuerbare Komponente zu senden, die Informationen über Notreserven sendet,
- die zentrale Regeleinheit weiters ausgebildet ist, um mit jeder Handlungsanweisung einen Wahrscheinlichkeitsfaktor mitzusenden, der inkrementell erhöht wird, wenn bei unzureichender Reaktion der steuerbaren Komponenten die Grenzwertüberschreitung nicht verhindert wird und somit erneut eine Handlungsanweisung gesendet werden muss, und
- die zentrale Regeleinheit weiters ausgebildet ist, um den Netzbetreiber zu informieren, falls die Notreserven der steuerbaren Komponenten nicht ausreichen, um die Grenzwertüberschreitung zu verhindern.

Die steuerbaren Komponenten können Gebäude mit Gebäudeautomationssystemen sein, wobei die Sendeeinrichtung jeweils Bestandteil des Gebäudeautomationssystems ist. Eine Empfangseinrichtung für den Empfang der Handlungsanweisungen bzw. Prioritätssignalen sollte nicht nur bei Gebäudeautomationssystemen, sondern bei allen steuerbaren Komponenten ohnehin vorhanden sein.

Das erfindungsgemäße Verfahren wird in der Regel als Computerprogramm implementiert sein, sodass die Erfindung auch ein Computerprogrammprodukt betrifft, welches ein Programm umfasst und direkt in einen Speicher einer zentralen Regeleinheit eines Nieder- oder Mittelspannungsnetzes ladbar ist, mit Programm-Mitteln, um alle Schritte des erfindungsgemäßen Verfahrens auszuführen, wenn das Programm von der zentralen Regeleinheit ausgeführt wird.

Das bisherige unidirektionale Verfahren wird also durch ein bidirektionales Verfahren zur Sicherstellung der Netzqualität ersetzt, das ein bidirektionales Prioritätshandshake verwirklicht, wobei die als Prioritätssignale verwendeten Handlungsanweisungen präziser und nachvollziehbarer zur Problembehebung eingesetzt werden können. Am erfindungsgemäßen Verfahren mitwirkende steuerbare Komponenten, insbesondere Smart Buildings, können, z.B. über ihre Gebäudeautomationssysteme (CEMS), ihre Notfallreserve melden. Durch diese Information kann von der zentralen Regeleinheit errechnet werden, wie und in welchem Umfang auf ein konkretes Problem reagiert werden kann und soll. Auf Basis dieser Berechnung können gezielt einzelne steuerbare Komponenten ausgewählt und ihnen konkrete Vorgaben gemacht werden. Diese Vorgaben müssen, umgehend, ohne Rücksicht auf Komfortverlust, umgesetzt werden. Durch das Bewertungssystem mit Hilfe der Auswahlfaktoren kann sichergestellt werden, dass die Prioritätssignale nicht immer die gleichen steuerbaren Komponenten trifft.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Es zeigen:
- Fig. 1: ein Ablaufschema für das erfindungsgemäße Verfahren in Zusammenhang mit den unterschiedlichen Netzzuständen gemäß der sogenannten Netzampel,
- Fig. 2: eine schematische Darstellung eines erfindungsgemäßen Niederspannungsnetzes.

### Ausführung der Erfindung

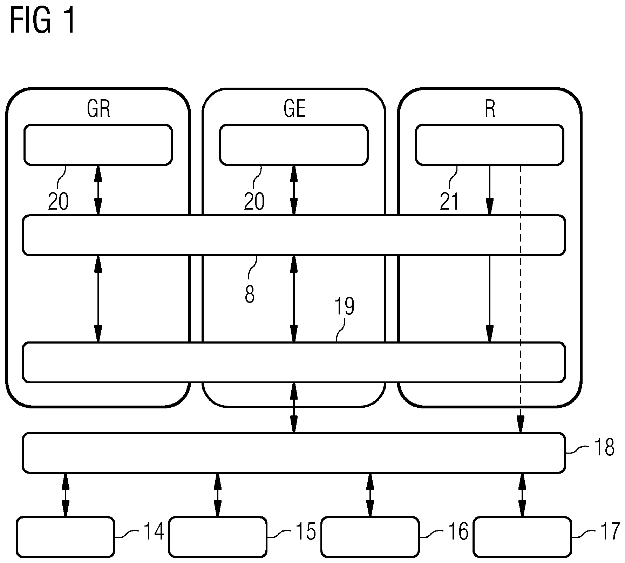

Das erfindungsgemäße Verfahren kann wie folgt in das Ampelmodell, das als Diskussionsgrundlage in der Nationalen Technologieplattform Smart Grids Austria entwickelt wurde (siehe Fig. 1), eingebettet werden. Die Zustände Rot R, Gelb GE und Grün GR spiegeln jeweils den unterschiedlichen Netzzustand wieder. Das gleiche gilt für alle lokalen Komponenten.

Die einzelnen steuerbaren Komponenten des Niederspannungsnetzes sind hier in Energieerzeuger 14, Elektrofahrzeuge bzw. deren Ladestationen 15, Energiespeicher 16 und flexible Verbraucher 17 unterteilt. Sie alle werden über Steuerungs- und Regeleinheiten 18 gesteuert bzw. geregelt, welche über eine übergeordnete Steuerung 19 (z.B. ein Gebäudemanagementsystem eines Gebäudes) überwacht wird. Im Zustand Gelb oder Grün können marktbasierende Energiedienste 20, also etwa Marktmechanismen, auf die übergeordnete Steuerung 19 einwirken. Im Zustand Grün können dabei Informationen zu Energiepreis und/oder Energiemenge ausgetauscht werden und die Steuerung 19 bzw. die Steuer- und Regelungseinheiten 18 entsprechend andere Steuerbefehle an die steuerbaren Komponenten senden. Im Zustand Gelb können Informationen zu Energiepreis und/oder elektrischer Leistung ausgetauscht werden und die Steuerung 19 bzw. die Steuer- und Regelungseinheiten 18 entsprechend andere Steuerbefehle an die steuerbaren Komponenten senden. Weiterhin ist nun zwischen die marktbasierenden Energiedienste 20 einerseits und die Steuerung 19 bzw. die Steuer- und Regelungseinheiten 18 andererseits die zentrale Regeleinheit 8 geschaltet, die in dieser Funktion auch als Flexibility Operator bezeichnet (Flexibilitätsanbieter) wird. Im Netzzustand Rot R ist vorgesehen, dass eine Sicherheitseinrichtung 21 im Hinblick auf elektrische Leistung bzw. Last (durchgehender Pfeil) Steuerbefehle aussendet, die ebenfalls über die erfindungsgemäße zentrale Regeleinheit 12 laufen. Nur Steuersignale der Sicherheitseinrichtung 21 mit hoher Priorität (strichlierter Pfeil), die sogenannten Prioritätssignale, würden bei herkömmlichen Flexibilitätsanbietern direkt an die Steuerung 19 bzw. die Steuer- und Regelungseinheiten 18 gesendet. Die erfindungsgemäß betriebene zentrale Regeleinheit 8 sollte einen solchen Fall eines direkten Durchgriffs z.B. vom Verteilnetzbetreiber weitgehend vermeiden, indem die Regeleinheit 8 das erfindungsgemäße Verfahren zur Anwendung bringt.

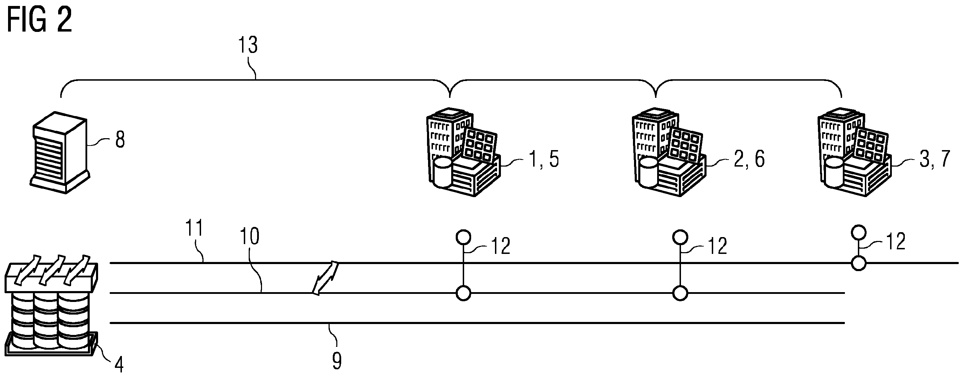

Fig. 2 zeigt beispielhaft das Schema eines Niederspannungsnetzes, welches über einen Ortsnetztransformator 4 mit elektrischer Energie versorgt wird. Das Niederspannungsnetz verfügt über steuerbare Komponenten, wie Smart Buildings 1,2,3 (intelligente Gebäude - sowohl Wohn- als auch Gewerbegebäude), von denen hier nur drei dargestellt sind. Selbstverständlich können auch andere steuerbare und nicht steuerbare Komponenten im Niederspannungsnetz vorhanden sein, diese sind hier aber nicht dargestellt. Insbesondere können auch andere Arten von steuerbaren Komponenten in das erfindungsgemäße Verfahren eingebunden werden. Alle Komponenten des Niederspannungsnetzes sind über elektrische Leitungen untereinander und mit dem Ortsnetztransformator 4 verbunden, nämlich mit den drei Phasenleitern, den Leitungssträngen 9,10,11. Die Smart Buildings 1,2,3 sind jeweils über Anbindungsleitungen 12 mit einem Leitungsstrang 9,10,11 verbunden. Dabei sind das erste 1 und das zweite Smart Building 2 mit dem zweiten Leitungsstrang 10 verbunden, das dritte Smart Building 3 mit dem dritten Leitungsstrang 11.

Die Smart Buildings 1,2,3 verfügen jeweils über ein Gebäudeautomationssystem 5,6,7, welches generell die Beschaffung, Wandlung, Verteilung und Nutzung von Energie, hier elektrischer Energie, koordiniert. Die Koordinierung erfolgt vorausschauend, organisiert, systematisch und unter Berücksichtigung ökologischer und ökonomischer Zielsetzungen. Es umfasst Organisations- und Informationsstrukturen einschließlich der dazu notwendigen technischen Maßnahmen wie z.B. Software. Ein Gebäudeautomationssystem 5,6,7 umfasst daher gemäß Erfindung zumindest einen Computer bzw. eine SPS mit Energiemanagement-Software sowie Datenverbindungen (z.B. Datenleitungen) zu Informationsquellen, Messgeräten und den zu steuernden Komponenten des Gebäudes.

Die Gebäudeautomationssysteme 5,6,7 sind über ein Kommunikationsnetz 13 mit der zentralen Regeleinheit 8 verbunden. Das Kommunikationsnetz 13 kann in einer Ausführungsform aus den Leitungssträngen 9,10,11 des Niederspannungsnetzes bestehen, sodass eine Powerline Communication (PLC) verwirklicht wird. Es können jedoch für das erfindungsgemäße Verfahren auch eigene Datenverbindungen hergestellt oder andere bestehende Datenverbindungen (z.B. von Smart Metern) genutzt werden.

Über dieses Kommunikationsnetz 13 werden laufend Informationen über die eigenen Notreserven an die zentrale Regeleinheit 8 gesendet. Wird bei einem Gebäude ein Gebäudeautomationssystem 5,6,7 nachgerüstet oder ein neues Smart Building an das Kommunikationsnetz 13 angeschlossen, beginnt automatisch ein Anmeldeprozess bei der zentralen Regeleinheit 8. Dabei werden eine Identitätskennzeichnung und die grundsätzliche Kapazität an Notreserve gemeldet. Dies wäre "maximale Wirkleistung reduzierbar", "maximale Wirkleistung erhöhbar", "maximale Blindleistung induktiv" und/oder "maximale Blindleistung kapazitiv". Die genaue Form der Meldung und die Kombinationen der gemeldeten Größen sind implementierungsabhängig.

Alle angemeldeten Gebäudeautomationssysteme 5,6,7 schicken laufend bzw. die zentrale Regeleinheit 8 fragt laufend die aktuell verfügbare Notreserve in den vier Quadranten ab. Somit hat die zentrale Regeleinheit 8 ein aktuelles Wissen über "Wirkleistung reduzierbar", "Wirkleistung erhöhbar", "Blindleistung induktiv" und/oder "Blindleistung kapazitiv" für alle angemeldeten Gebäudeautomationssysteme 5,6,7.

Wenn nun ein - in Fig. 2 durch einen Blitz dargestelltes - Netzproblem (z.B. sehr starke Überspannung über mehrere Minuten) im zweiten Leitungsstrang 10 auftritt, wird die zentrale Regeleinheit 8 (wenn der Ortsnetztransformator 4 das Netzproblem durch Stufenstellung nicht lösten konnte) aufgrund der bekannten Notreserven das notwendige Prioritätssignal in Form einer erfindungsgemäßen Handlungsanweisung berechnen und an angemeldete Gebäudeautomationssysteme 5,6,7 senden. Die Handlungsanweisung kann z.B. lauten "xy kW Wirkleistung reduzieren", "xy kW Wirkleistung erhöhen", "xy kVAr Blindleistung induktiv" oder "xy kVAr Blindleistung kapazitiv". Denkbar sind auch Kombinationen von derartigen Handlungsanweisungen. Der mitgesendete Wahrscheinlichkeitsfaktor ist ein Wert zwischen 0 und 1 und wird bei unzureichender Reaktion und damit keiner Verminderung der Grenzwertüberschreitung inkrementell erhöht.

Bei der ersten Verfahrensvariante erhalten alle Gebäudeautomationssysteme 5,6,7 die gleiche Handlungsanweisung mit dem gleichen Wahrscheinlichkeitsfaktor. Lediglich ein unterschiedlicher Auswahlfaktor der einzelnen Gebäudeautomationssysteme 5,6,7 kann bedingen, dass die Smart Buildings 1,2,3 mit unterschiedlicher Priorität zur Behebung der Grenzwertüberschreitung beitragen.

Das Smart Building 3 kann aber durch Befolgen der Handlungsanweisung nichts beitragen, weil es nicht am betroffenen Leitungsstrang 10 angeschlossen ist. Wenn nun die Smart Buildings 1,2 nicht genügend Notreserven haben, kann das Problem nicht durch die Smart Buildings 1,2 gelöst werden, die zentrale Regeleinheit 8 muss dies der Zentrale des Netzbetreibers melden. Nachteilig an der ersten Verfahrensvariante ist, dass alle Smart Buildings 1,2,3 die maximale Notreserve liefern, ohne das Problem zu lösen.

Bei der zweiten Verfahrensvariante, bei welcher die Topologie des Niederspannungsnetzes bezüglich der Gebäudeautomationssysteme 5,6,7 bekannt ist, erhalten die einzelnen Gebäudeautomationssysteme 5,6,7 unterschiedliche Handlungsanweisungen, aber mit dem gleichen Wahrscheinlichkeitsfaktor. Eine Handlungsanweisung an ein Gebäudeautomationssystem könnte also lauten "xy kW Wirkleistung reduzieren", während die Handlungsanweisung an ein anderes Gebäudeautomationssystem lautet "yz kW Wirkleistung reduzieren", je nach Notreserve des jeweiligen Gebäudeautomationssystems, eventuell auch in Abhängigkeit der Topologie.

Dazu kann die zentrale Regeleinheit 8 über ein Topologiemodell verfügen und darauf basierend einzelne Smart Buildings 1,2,3 bzw. eine Gruppe auswählen. Dies kann z.B. über eine Beitragsmatrix erfolgen, in der die Wirksamkeit einzelner Smart Buildings 1,2,3 an bestimmten Netzknoten hinterlegt wird. Damit auch in diesem Fall ein gewisser Sicherheitsfaktor bzw. eine gewisse Fairness umgesetzt werden kann, wird die Gruppe nicht auf die kleinstmögliche reduziert (z.B. nicht auf ein Smart Building), sondern auch eine entsprechend höhere Anzahl von teilnehmenden steuerbaren Komponenten.

Es erhalten also nur die Gebäudeautomationssysteme 5,6 eine Handlungsanweisung, weil die Smart Buildings 1,2 am betroffenen Leitungsstrang 10 angeschlossen sind. Das Gebäudeautomationssystem 7 erhält keine Handlungsanweisung. Zusätzlich kann ein unterschiedlicher Auswahlfaktor der einzelnen Gebäudeautomationssysteme 5,6 bedingen, dass die Smart Buildings 1,2 mit unterschiedlicher Priorität zur Behebung der Grenzwertüberschreitung beitragen.

Bei beiden Verfahrensvarianten wird per Zufallsgenerator von einem Algorithmus jeweils innerhalb des Gebäudeautomationssystems 5,6,7 bei jedem neuen Prioritätssignal, das ankommt, ein Wert zwischen 0 und 1 ermittelt. Dies dient dazu, dass bei inkrementeller Erhöhung des Wahrscheinlichkeitsfaktors nicht alle gleichzeitig oder immer die gleichen zuerst zur Lösung der Grenzwertüberschreitung beitragen müssen. Dieser Auswahlfaktor dient also zur Etablierung einer gewissen Fairness.

### Bezugszeichenliste:

- 1: erstes Smart Building (intelligentes Gebäude)
- 2: zweites Smart Building (intelligentes Gebäude)
- 3: drittes Smart Building (intelligentes Gebäude)
- 4: Ortsnetztransformator
- 5: erstes Gebäudeautomationssystem
- 6: zweites Gebäudeautomationssystem
- 7: drittes Gebäudeautomationssystem
- 8: zentrale Regeleinheit
- 9: erster Leitungsstrang
- 10: zweiter Leitungsstrang
- 11: dritter Leitungsstrang
- 12: Anbindungsleitung
- 13: Kommunikationsnetz
- 14: Energieerzeuger
- 15: Elektrofahrzeuge bzw. deren Ladestationen
- 16: Energiespeicher
- 17: flexible Verbraucher
- 18: Steuer- und Regelungseinheiten für steuerbare Komponenten
- 19: übergeordnete Steuerung
- 20: marktbasierende Energiedienste
- 21: Sicherheitseinrichtung

- GE: Netzzustand Gelb
- GR: Netzzustand Grün
- R: Netzzustand Rot

## Patentansprüche

1. Verfahren zur Netzregelung bei Grenzwertüberschreitungen in einem Nieder- oder Mittelspannungsnetz, wobei Stellbefehle von einer zentralen Regeleinheit (8) des Nieder- oder Mittelspannungsnetzes an steuerbare Komponenten (1,2,3) des Nieder- oder Mittelspannungsnetzes gesendet werden, wobei von mehreren steuerbaren Komponenten (1,2,3) jeweils laufend Informationen über die eigenen Notreserven zur Reduzierung von Grenzwertüberschreitungen an die zentrale Regeleinheit (8) gesendet werden, **dadurch gekennzeichnet,**
- **dass** die zentrale Regeleinheit (8) bei einer Grenzwertüberschreitung die notwendige Korrektur berechnet und eine entsprechende Handlungsanweisung zur Reduzierung von Grenzwertüberschreitungen an zumindest eine steuerbare Komponente (1,2,3) sendet, die Informationen über Notreserven sendet,
- **dass** mit jeder Handlungsanweisung ein Wahrscheinlichkeitsfaktor in einem Bereich zwischen Werten 0 und 1 mitgesendet wird, der inkrementell erhöht wird, wenn bei unzureichender Reaktion der steuerbaren Komponenten (1,2,3) die Grenzwertüberschreitung nicht verhindert wird und somit erneut eine Handlungsanweisung gesendet werden muss, wobei jede steuerbare Komponente (1,2,3) nach dem Zufallsprinzip für sich einen Auswahlfaktor in einem Bereich zwischen Werten 0 bis 1 festlegt, der zum Wahrscheinlichkeitsfaktor addiert wird und für die jeweilige bestehende Grenzüberschreitung gleich bleibt, und wobei eine Verpflichtung zum Handeln für die jeweilige steuerbare Komponente (1,2,3) mit Erreichen des Wertes 1 durch einen resultierenden Wahrscheinlichkeitsfaktor zwingend wird, und
- **dass** die zentrale Regeleinheit (8) den Netzbetreiber informiert, falls die Notreserven der steuerbaren Komponenten (1,2,3) nicht ausreichen, um die Grenzwertüberschreitung zu verhindern.

2. Verfahren nach Anspruch 1, **dadurch gekennzeichnet, dass** die gleiche Handlungsanweisung mit dem gleichen Wahrscheinlichkeitsfaktor an mehrere, insbesondere alle, steuerbaren Komponenten (1,2,3) gesendet wird, die Informationen über Notreserven senden.

3. Verfahren nach Anspruch 1, **dadurch gekennzeichnet, dass** unter Berücksichtigung der jeweiligen Notreserve der einzelnen steuerbaren Komponenten für unterschiedliche steuerbare Komponenten (1,2,3) unterschiedliche Handlungsanweisungen, aber mit demselben Wahrscheinlichkeitsfaktor, gesendet werden.

4. Verfahren nach Anspruch 3, **dadurch gekennzeichnet, dass** die Auswahl der steuerbaren Komponenten (1,2,3) aufgrund von Topologieinformation über das Nieder- oder Mittelspannungsnetz erfolgt.

5. Verfahren nach Anspruch 4, **dadurch gekennzeichnet, dass** die Information über die Notreserve jeder steuerbaren Komponente (1,2,3) in Zusammenhang mit deren Lage im Nieder- oder Mittelspannungsnetz abgespeichert wird.

6. Verfahren nach einem der Ansprüche 3-5, **dadurch gekennzeichnet, dass** eine Mindestanzahl von steuerbaren Komponenten (1,2,3) ausgewählt wird.

7. Verfahren nach einem der Ansprüche 1 bis 6, **dadurch gekennzeichnet, dass** von jeder steuerbare Komponente (1,2,3) nach dem Zufallsprinzip der Auswahlfaktor bei jeder weiteren Grenzwertüberschreitung im Nieder- oder Mittelspannungsnetz neu festgelegt wird.

8. Verfahren nach einem der Ansprüche 1 bis 7, **dadurch gekennzeichnet, dass** die Informationen über die Notreserve zumindest einen der folgenden Werte enthält:
- die maximal mögliche Reduzierung der Wirkleistung
- die maximal mögliche Erhöhung der Wirkleistung
- die maximal mögliche induktive Blindleistung
- die maximal mögliche kapazitive Blindleistung.

9. System zur Durchführung des Verfahrens nach einem der Ansprüche 1 bis 8, umfassend eine zentrale Regeleinheit (8) und mehrere steuerbare Komponenten (1,2,3) eines Nieder- oder Mittelspannungsnetzes, die über ein Kommunikationsnetz (13) miteinander verbunden sind,
- wobei mehrere steuerbare Komponenten (1,2,3) über eine Sendeeinrichtung verfügen, um über das Kommunikationsnetz (13) jeweils laufend Informationen über die eigenen Notreserven zur Reduzierung von Grenzwertüberschreitungen an die zentrale Regeleinheit (8) zu senden, **dadurch gekennzeichnet,**
- **dass** die zentrale Regeleinheit (8) ausgebildet ist, um bei einer Grenzwertüberschreitung die notwendige Korrektur zu berechnen und eine entsprechende Handlungsanweisung zur Reduzierung von Grenzwertüberschreitungen an zumindest eine steuerbare Komponente (1,2,3) zu senden, die Informationen über Notreserven sendet,
- **dass** die zentrale Regeleinheit (8) weiters ausgebildet ist, um mit jeder Handlungsanweisung einen Wahrscheinlichkeitsfaktor in einem Bereich von Werten 0 bis 1 mitzusenden, der inkrementell erhöht wird, wenn bei unzureichender Reaktion der steuerbaren Komponenten (1,2,3) die Grenzwertüberschreitung nicht verhindert wird und somit erneut eine Handlungsanweisung gesendet werden muss, wobei jede steuerbare Komponente (1,2,3) nach dem Zufallsprinzip für sich einen Auswahlfaktor in einem Bereich zwischen Werten 0 bis 1 festlegt, der zum Wahrscheinlichkeitsfaktor addiert wird und für die jeweilige bestehende Grenzüberschreitung gleich bleibt, und wobei eine Verpflichtung zum Handeln für die jeweilige steuerbare Komponente (1,2,3) mit Erreichen des Wertes 1 durch einen resultierenden Wahrscheinlichkeitsfaktor zwingend wird, und
- **dass** die zentrale Regeleinheit (8) weiters ausgebildet ist, um den Netzbetreiber zu informieren, falls die Notreserven der steuerbaren Komponenten (1,2,3) nicht ausreichen, um die Grenzwertüberschreitung zu verhindern.

10. System nach Anspruch 9, **dadurch gekennzeichnet, dass** die steuerbaren Komponenten (1,2,3) Gebäude mit Gebäudeautomationssystemen (5,6,7) sind, wobei die Sendeeinrichtung jeweils Bestandteil des Gebäudeautomationssystems (5,6,7) ist.

11. Computerprogrammprodukt, welches ein Programm umfasst und direkt in einen Speicher einer zentralen Regeleinheit (8) eines Nieder- oder Mittelspannungsnetzes ladbar ist, mit Programm-Mitteln, um alle Schritte des Verfahrens nach einem der Ansprüche 1 bis 8 auszuführen, wenn das Programm von der zentralen Regeleinheit (8) ausgeführt wird.

## Claims

1. Method for network regulation on threshold value overshoots in a low voltage or medium voltage network, wherein control commands are transmitted from a central regulation unit (8) of the low voltage or medium voltage network to controllable components (1, 2, 3) of the low voltage or medium voltage network,
wherein information is continuously transmitted from each of a plurality of controllable components (1, 2, 3) to the central regulation unit (8) regarding their own emergency reserves for reducing threshold value overshoots, **characterised in that**,
- on a threshold value overshoot, the central regulation unit (8) calculates the necessary correction and transmits a suitable action instruction for reducing threshold value overshoots to at least one controllable component (1, 2, 3) which transmits information regarding emergency reserves,
- with each action instruction, a probability factor in a range between values 0 and 1 is also transmitted which is incrementally raised if, given an insufficient reaction of the controllable components (1, 2, 3), the threshold value overshoot is not prevented and thus an action instruction must be transmitted anew, wherein each controllable component (1, 2, 3) specifies for itself, according to the random process, a selection factor in a range between values 0 and 1 which is added to the probability factor and remains equal for the respective existing threshold value overshoot, and wherein a requirement to take action for the respective controllable component (1, 2, 3) is compulsory on the resulting probability factor reaching the value 1, and
- the central regulation unit (8) informs the network operator if the emergency reserves of the controllable components (1, 2, 3) are not sufficient to prevent the threshold value overshoot.

2. Method according to claim 1, **characterised in that** the same action instruction is transmitted with the same probability factor to a plurality of, in particular all, controllable components (1, 2, 3) which transmit information concerning emergency reserves.

3. Method according to claim 1, **characterised in that,** taking account of the respective emergency reserve of the individual controllable components, different action instructions are transmitted for different controllable components (1, 2, 3), but with the same probability factor.

4. Method according to claim 3, **characterised in that** the selection of the controllable components (1, 2, 3) is carried out on the basis of topological information about the low voltage or medium voltage network.

5. Method according to claim 4, **characterised in that** the information about the emergency reserve of each controllable component (1, 2, 3) is stored in association with its position in the low voltage or medium voltage network.

6. Method according to one of claims 3-5, **characterised in that** a minimum number of controllable components (1, 2, 3) is selected.

7. The method according to one of claims 1 to 6, **characterised in that** the selection factor is specified anew by each controllable component (1, 2, 3), according to the random process, on each further threshold value overshoot in the low voltage or medium voltage network.

8. Method according to one of claims 1 to 7, **characterised in that** the information concerning the emergency reserve contains at least one of the following values:
- the maximum possible reduction of the effective power
- the maximum possible increase of the effective power
- the maximum possible inductive reactive power
- the maximum possible capacitive reactive power.

9. System for carrying out the method according to one of claims 1 to 8, comprising a central regulation unit (8) and a plurality of controllable components (1, 2, 3) of a low voltage or medium voltage network which are connected to one another via a communication network (13),
wherein a plurality of controllable components (1, 2, 3) have a transmitting device in order each to transmit information continuously via the communication network (13) to the central regulation unit (8) regarding their own emergency reserves for reducing threshold value overshoots,
**characterised in that**
- the central regulation unit (8) is configured to calculate, on a threshold value overshoot, the necessary correction and to transmit a suitable action instruction for reducing threshold value overshoots to at least one controllable component (1, 2, 3) which transmits information regarding emergency reserves,
- the central regulation unit (8) is further configured in order, with each action instruction, also to transmit a probability factor in a range of values 0 to 1 which is incrementally raised if, given an insufficient reaction of the controllable components (1, 2, 3), the threshold value overshoot is not prevented and thus an action instruction must be transmitted anew, wherein each controllable component (1, 2, 3) specifies for itself, according to the random process, a selection factor in a range between the values 0 to 1 which is added to the probability factor and remains equal for the respective existing threshold value overshoot, and wherein a requirement to take action for the respective controllable component (1, 2, 3) is compulsory on a resulting probability factor reaching the value 1, and
- the central regulation unit (8) is further configured to inform the network operator if the emergency reserves of the controllable components (1, 2, 3) are not sufficient to prevent the threshold value overshoot.

10. System according to claim 9, **characterised in that** the controllable components (1, 2, 3) are buildings with building automation systems (5, 6, 7) wherein the respective transmitting device is a component part of the respective building automation system (5, 6, 7).

11. Computer program product which comprises a program and can be loaded directly into a memory store of a central regulation unit (8) of a low voltage or medium voltage network, and has program means to carry out all the steps of the method according to one of claims 1 to 8 when the program is executed by the central regulation unit (8).

## Revendications

1. Procédé de régulation de réseau pour des cas de dépassements de valeurs limites dans un réseau de basse ou moyenne tension, selon lequel des ordres de régulation sont envoyés par une unité de régulation centrale (8) du réseau de basse ou moyenne tension à des composants commandables (1, 2, 3), et des informations respectives sur les propres réserves de secours pour réduire les dépassements de valeurs limites sont envoyées continuellement par plusieurs composants commandables à l'unité de régulation centrale (8),
**caractérisé en ce que**
- l'unité de régulation centrale (8), en cas de dépassement de valeur limite, calcule la correction nécessaire et envoie une instruction opératoire correspondante pour réduire les dépassements de valeurs limites à au moins un composant commandable (1, 2, 3), qui envoie des informations sur les réserves de secours,
- avec chaque instruction opératoire, un facteur de probabilité compris entre 0 et 1 est envoyé, lequel est augmenté incrémentiellement si, en cas de réaction insuffisante des composants commandables (1, 2, 3), le dépassement de valeur limite n'est pas empêché et ainsi une instruction opératoire doit à nouveau être envoyée, chaque composant commandable (1, 2, 3) fixant pour lui un facteur de sélection au hasard compris entre 0 et 1 qui est ajouté au facteur de probabilité et reste le même pour le dépassement de valeur limite existant respectif, et selon lequel une obligation d'agir pour l'au moins un composant commandable respectif (1, 2, 3) devient obligatoire à l'obtention de la valeur 1 par un facteur de probabilité résultant, et
- l'unité de régulation centrale (8) informe le gestionnaire du réseau si les réserves de secours des composants commandables (1, 2, 3) ne suffisent pas pour empêcher le dépassement de valeur limite.

2. Procédé selon la revendication 1, **caractérisé en ce que** la même instruction opératoire est envoyée avec le même facteur de probabilité à plusieurs, et plus particulièrement à tous les composants commandables (1, 2, 3) qui envoient des informations sur les réserves de secours.

3. Procédé selon la revendication 1, **caractérisé en ce qu'**en tenant compte de la réserve de secours respective des différents composants commandables, des instructions opératoires différentes sont envoyées pour différents composants commandables (1, 2, 3), mais avec le même facteur de probabilité.

4. Procédé selon la revendication 3, **caractérisé en ce que** la sélection des composants commandables (1, 2, 3) est effectuée sur la base d'une information topologique sur le réseau de basse ou de moyenne tension.

5. Procédé selon la revendication 4, **caractérisé en ce que** les informations sur la réserve de secours de chaque composant commandable (1, 2, 3) sont enregistrées en relation avec leur position dans le réseau de basse ou de moyenne tension.

6. Procédé selon l'une des revendications 3 à 5, **caractérisé en ce qu'**un nombre minimal de composants commandables (1, 2, 3) est sélectionné.

7. Procédé selon l'une des revendications 1 à 6, **caractérisé en ce que** le facteur de sélection est fixé à nouveau par chaque composant commandable (1, 2, 3) au hasard à chaque autre dépassement de valeur limite dans le réseau de basse ou moyenne tension.

8. Procédé selon l'une des revendications 1 à 7, **caractérisé en ce que** les informations sur la réserve de secours contiennent au moins l'une des valeurs suivantes :
- la réduction maximale possible de la puissance active,
- l'augmentation maximale possible de la puissance active,
- la puissance réactive inductive maximale possible.
- la puissance réactive capacitive maximale possible.

9. Système pour exécuter le procédé selon l'une des revendications 1 à 8, comprenant une unité de régulation centrale (8) et plusieurs composants commandables (1, 2, 3) d'un réseau de basse ou moyenne tension, qui sont reliés entre eux par l'intermédiaire d'un réseau de communication (13), selon lequel
plusieurs composants commandables (1, 2, 3) disposent d'un dispositif émetteur, pour envoyer continuellement, via le réseau de communication (13), des informations respectives sur les propres réserves de secours pour réduire les dépassements de valeurs limites à l'unité de régulation centrale (8),
**caractérisé en ce que**
- l'unité de régulation centrale (8) est conçue de manière à calculer en cas de dépassement de valeur limite la correction nécessaire et à envoyer une instruction opératoire correspondante pour réduire les dépassements de valeur limite à l'au moins un composant (1, 2, 3) commandable, qui envoie des informations sur des réserves de secours,
- l'unité de régulation centrale (8) est conçue en outre pour envoyer avec chaque instruction opératoire un facteur de probabilité compris entre 0 et 1, qui est augmenté incrémentiellement si, en cas de réaction insuffisante des composants commandables (1, 2, 3), le dépassement de valeur limite n'est pas empêché et ainsi une instruction opératoire doit à nouveau être envoyée, chaque composant commandable (1, 2, 3) fixant pour lui au hasard un facteur de sélection compris entre 0 et 1 qui est ajouté au facteur de probabilité et reste le même pour le dépassement de valeur limite respectif existant, et selon lequel, à l'obtention de la valeur 1 par un facteur de probabilité résultant, une obligation d'agir pour le composant commandable respectif (1, 2, 3) devient obligatoire, et
- l'unité de régulation centrale (8) est conçue en outre pour informer le gestionnaire du réseau dans le cas où les réserves de secours des composants commandables (1, 2, 3) ne sont pas suffisantes pour empêcher le dépassement de valeur limite.

10. Système selon la revendication 9, **caractérisé en ce que** les composants commandables (1, 2, 3) sont des bâtiments dotés de systèmes d'automatisation de bâtiments (5, 6, 7), le dispositif émetteur étant un élément constitutif respectif du système d'automatisation de bâtiment (5, 6, 7) .

11. Produit de programme informatique, qui comprend un programme et peut être chargé directement dans une mémoire d'une unité centrale de régulation (8) d'un réseau de basse ou moyenne tension, et comprenant des moyens de programme permettant d'exécuter toutes les étapes du procédé selon l'une quelconque des revendications 1 à 8 lorsque le programme est exécuté par l'unité de régulation centrale (8).
